# EUROPÄISCHE PATENTSCHRIFT

(11) **EP 3 469 330 B1**
(45) Veröffentlichungstag und Bekanntmachung des Hinweises auf die Patenterteilung: **16.09.2020**
(21) Anmeldenummer: 17728507.9
(22) Anmeldetag: 01.06.2017
(51) Int. Cl.: G01M 15/10

(54) **ABGASÜBERPRÜFUNGSVERFAHREN**
EXHAUST GAS INSPECTION METHOD
PROCÉDÉ DE CONTRÔLE DES GAZ D'ÉCHAPPEMENT

(30) Priorität: 14.06.2016 AT 505382016
(43) Veröffentlichungstag der Anmeldung: 17.04.2019
(73) Patentinhaber: Technische Universität Wien, 1040 Wien (AT)
(72) Erfinder: PUCHER, Ernst, 1140 Wien (AT)
(74) Vertreter: Puchberger & Partner Patentanwälte
(86) Internationale Anmeldenummer: PCT/EP2017/063289
(87) Internationale Veröffentlichungsnummer: WO 2017/215931

(56) Entgegenhaltungen:
- EP-A1- 2 434 270
- US-A- 3 998 095
- US-A1- 2015 211 962
- G. C. HASS ET AL: "A Test Procedure for Motor Vehicle Exhaust Emissions", JOURNAL OF THE AIR POLLUTION CONTROL ASSOCIATION : JAPCA, Bd. 12, Nr. 11, 30. November 1962 (1962-11-30), Seiten 505-543, XP055400742, US ISSN: 0002-2470, DOI: 10.1080/00022470.1962.10468120

## Beschreibung

Die Erfindung betrifft ein Verfahren zur Bestimmung und Überprüfung mindestens eines Abgaskennwerts eines Prüflings gemäß den Merkmalen des unabhängigen Patentanspruchs. Insbesondere betrifft die Erfindung ein universelles, rasch durchzuführendes Messverfahren für gasförmige und partikelförmige Emissionen von Verbrennungskraftmaschinen.

Gemäß Stand der Technik sind unterschiedliche Messverfahren bekannt, die eine Bestimmung und Überprüfung der von einem Prüfling ausgestoßenen Emissionen ermöglichen. Als Beispiel, Patent US 3,998,095 (1975) offenbart ein Verfahren und eine Vorrichtung zur schnellen Ermittlung von Abgasemissionen, wobei die Emissionen an drei konstanten Betriebspunkten gemessen werden. Patent EP 2 434 270 A1 (2012) offenbart ein Verfahren und ein System zur Bestimmung der Massenemissionsrate eines Schadstoffes im Abgas von mobilen Gerätschaften. Patent DE 10 2015 100 889 A1 (2015) offenbart ein Verfahren zum Schätzen eines gegenwärtigen Rußausgangs von einem Motor. Das Verfahren umfasst ein Erfassen eines Massendurchflusses einer Strömung von Abgas von dem Motor und ein Definieren einer Rußausgangsbasisrate des Motors, wenn der Motor bei einem Referenzzustand arbeitet. Es wird ein Rußverhältnis für einen gegenwärtigen Betriebszustand des Motors berechnet.

Beispielsweise sind Prüfstandsmessungen bekannt, bei denen ein Fahrzeug oder ein Verbrennungsmotor mit einem Prüfstand verbunden wird, um in weiterer Folge vordefinierte Fahrzyklen zu durchlaufen. Nachteilig an derartigen Verfahren ist, dass der Messaufbau mit erheblichem Aufwand verbunden ist, wobei trotz dieses hohen Aufwands, die am Prüfstand gemessenen Emissionen in manchen Fällen erheblich von den tatsächlichen Emissionen des Fahrzeugs oder des Verbrennungsmotors abweichen, die im realen Betrieb auftreten.

Aus diesem Grund werden gemäß Stand der Technik sogenannte "onboard-Messgeräte" zur Erhebung von Emissionsdaten des realen Fahrbetriebs eingesetzt. Nachteilig an diesem Verfahren ist, dass das Durchführen von Messfahrten mit einem "onboard-Messgerät" einen erhöhten Aufwand darstellt. Darüber hinaus können die Ergebnisse von Messfahrten stark von den jeweiligen Umständen der Messfahrt abhängig sein. Für eine rasche und einfache Werkstattüberprüfung sind die obengenannten Verfahren nicht geeignet.

Jedoch sind gemäß Stand der Technik Schnelltests bekannt, die im Rahmen der periodischen Inspektion von Kraftfahrzeugen durchgeführt werden. So wird bei Diesel-Fahrzeugen in Europa lediglich die Abgastrübung bei freier Motorbeschleunigung gemessen. Ferner erfolgt bei der Überprüfung von Personenkraftwagen wahlweise ein Auslesen der onboard-Diagnose zur Bewertung emissionsrelevanter Daten der Fahrzeugelektronik. Bei diesen Schnelltests wird gemäß Stand der Technik jedoch keine Abgasmessung durchgeführt. Insbesondere basieren die derzeitigen Methoden teilweise auf Daten, die von der Fahrzeugelektronik generiert werden. Diese Daten sind in manchen Fällen nicht zuverlässig und verfälschen dadurch die Ergebnisse.

Somit findet bei der periodischen Inspektion von Kraftfahrzeugen keine direkte Wirkprüfung statt, die vom Fahrzeug unabhängig ist. Insbesondere werden wichtige Abgaskomponenten wie Kohlendioxid, Stickstoffoxide, Feinpartikelanzahl und Ammoniak derzeit nicht überprüft.

Aufgabe der Erfindung ist es nun die Nachteile des Standes der Technik zu überwinden und insbesondere ein effizient durchführbares Verfahren zur Überprüfung des Abgasverhaltens eines Prüflings zu schaffen, das bevorzugt im Rahmen einer periodischen Inspektion, als auch zur Detektion von hoch emittierenden Verbrennungskraftmaschinen für mobile und stationäre Anwendungen im realen Betrieb geeignet ist.

Die erfindungsgemäße Aufgabe wird insbesondere durch die Merkmale des unabhängigen Patentanspruchs gelöst.

Bevorzugt betrifft die Erfindung ein Verfahren zur Bestimmung und Überprüfung mindestens eines Abgaskennwerts eines Prüflings unter Verwendung eines Messsystems, wobei der Prüfling zumindest eine Verbrennungskraftmaschine und gegebenenfalls eine der Verbrennungskraftmaschine nachgeordnete Abgasnachbehandlungsanlage enthält.
Bevorzugt umfasst das Verfahren folgende Schritte:
- Versetzen des Prüflings in einen ersten konstanten Betriebsmodus,
- Verifizieren, ob ein konstanter Betriebsmodus vorliegt, durch Messen der Emission mindestens einer Abgaskomponente und/oder der Luftverhältniszahl im Abgas des Prüflings und durch Erfassen und/oder Überwachen der Werteschwankungen der aufgenommenen Emission oder der aufgenommenen Emissionen, insbesondere der einer Abgaskomponente(n) und/oder der Luftverhältniszahl, während des Betriebs des Prüflings im ersten konstanten Betriebsmodus,
- Messen eines ersten Emissionswertes der mindestens einen Abgaskomponente und Bestimmen einer ersten Luftverhältniszahl aus der Abgaszusammensetzung während des verifizierten ersten konstanten Betriebsmodus, wobei der Emissionswert insbesondere ein Konzentrationswert einer Abgaskomponente oder ein Partikelanzahlwert ist,
- Bestimmen eines ersten Abgaskennwertes durch Umrechnen des ersten Emissionswertes auf eine vordefinierte Luftverhältniszahl oder auf eine stöchiometrische Verbrennung durch Multiplizieren des ersten Emissionswertes mit der ersten Luftverhältniszahl.

Bevorzugt umfasst das Verfahren folgende Schritte:
- Versetzen des Prüflings in einen zweiten konstanten Betriebsmodus,
- Verifizieren, ob ein konstanter Betriebsmodus vorliegt, durch Messen der Emission mindestens einer Abgaskomponente und/oder der Luftverhältniszahl und durch Erfassen und/oder Überwachen der Werteschwankungen der aufgenommenen Emission oder der aufgenommenen Emissionen während des Betriebs des Prüflings im zweiten konstanten Betriebsmodus,
- Messen eines zweiten Emissionswertes der mindestens einen Abgaskomponente und Bestimmen einer zweiten Luftverhältniszahl aus der Abgaszusammensetzung während des verifizierten zweiten konstanten Betriebsmodus, wobei der Emissionswert insbesondere ein Konzentrationswert einer Abgaskomponente oder ein Partikelanzahlwert ist,
- Bestimmen eines zweiten Abgaskennwertes durch Umrechnen des zweiten Emissionswertes auf eine vordefinierte Luftverhältniszahl oder auf eine stöchiometrische Verbrennung durch Multiplizieren des zweiten Emissionswertes mit der zweiten Luftverhältniszahl.
Gegebenenfalls ist vorgesehen, dass der Prüfling in einem der konstanten Betriebsmodi, insbesondere im ersten konstanten Betriebsmodus, im Leerlauf bei konstanter Leerlaufdrehzahl betrieben wird.
Gegebenenfalls ist vorgesehen, dass der Prüfling im anderen konstanten Betriebsmodus, insbesondere im zweiten konstanten Betriebsmodus:
- im Leerlauf bei konstanter erhöhter Leerlaufdrehzahl,
- und/oder im Leerlauf bei konstanter auf 20% bis 40%, insbesondere auf 30%, der Drehzahl der maximalen Leistung des Prüflings erhöhter Leerlaufdrehzahl,
- und/oder bei, gegenüber dem anderen konstanten Betriebsmodus, konstant erhöhter Last betrieben wird.
Gegebenenfalls ist vorgesehen, dass der Prüfling ein Fahrzeug mit einem Verbrennungsmotor ist, und dass der Prüfling, zum Herstellen eines konstanten Betriebsmodus, insbesondere zum Herstellen des zweiten konstanten Betriebsmodus, mit einer gegenüber dem anderen konstanten Betriebszustand erhöhten prüflingseigenen Last beaufschlagt wird.
Gegebenenfalls ist vorgesehen, dass der Prüfling ein Fahrzeug mit einem Verbrennungsmotor ist, und dass der Prüfling, zum Herstellen eines konstanten Betriebsmodus, insbesondere zum Herstellen des zweiten konstanten Betriebsmodus, mit einer gegenüber dem anderen konstanten Betriebszustand erhöhten prüflingseigenen Last beaufschlagt wird, wobei die erhöhte prüflingseigene Last
- eine erhöhte Motorreibung bei erhöhter Drehzahl,
- und/oder ein erhöhter Abgasgegendruck bei erhöhter Motordrehzahl
- und/oder eine erhöhte Belastung durch Zuschaltung mindestens eines lasterzeugenden prüflingseigenen Nebenaggregats ist.
Gegebenenfalls ist vorgesehen, dass der Prüfling ein Fahrzeug mit einem Verbrennungsmotor ist, und dass der Prüfling, zum Herstellen eines konstanten Betriebsmodus, insbesondere zum Herstellen des zweiten konstanten Betriebsmodus, mit einer gegenüber dem anderen konstanten Betriebszustand erhöhten Last beaufschlagt wird, wobei die erhöhte Last durch Betreiben des Prüflings auf einem Rollenprüfstand erzeugt wird.
Gegebenenfalls ist vorgesehen, dass die Abgastemperatur des Prüflings gemessen wird, und dass das Messen des ersten Emissionswertes der mindestens einen Abgaskomponente und das Bestimmen einer ersten Luftverhältniszahl aus der Abgaszusammensetzung während des verifizierten ersten konstanten Betriebsmodus, nur dann erfolgt, wenn die Abgastemperatur oberhalb eines vorbestimmten Temperaturschwellenwertes von insbesondere 200°C und/oder in einem vorbestimmten Temperaturfenster liegt.
Gegebenenfalls ist vorgesehen, dass die Abgastemperatur des Prüflings gemessen wird, und dass das Messen des zweiten Emissionswertes der mindestens einen Abgaskomponente und das Bestimmen einer zweiten Luftverhältniszahl aus der Abgaszusammensetzung während des verifizierten zweiten konstanten Betriebsmodus, nur dann erfolgt, wenn die Abgastemperatur oberhalb eines vorbestimmten Temperaturschwellenwertes von insbesondere 200°C und/oder in einem vorbestimmten Temperaturfenster liegt.
Gegebenenfalls ist vorgesehen, dass zum Verifizieren, ob ein konstanter Betriebsmodus vorliegt, folgende Schritte ausgeführt werden:
- Messen der Emission mindestens einer Abgaskomponente im Abgas des Prüflings über eine Zeitdauer t,
- Erfassen und/oder Überwachen der Werteschwankungen der aufgenommenen Emission oder der aufgenommenen Emissionen während der Zeitdauer t,
- Überprüfen, ob die Werteschwankungen der aufgenommenen Emission oder der aufgenommenen Emissionen während der Zeitdauer t innerhalb einer vorbestimmten maximalen Schwankungsbreite liegen.
Gegebenenfalls ist vorgesehen, dass zum Verifizieren, ob ein konstanter Betriebsmodus vorliegt, folgende Schritte ausgeführt werden:
- Messen der Emission mindestens einer Abgaskomponente im Abgas des Prüflings über eine Zeitdauer von fünf Sekunden,
- Erfassen und/oder Überwachen der Werteschwankungen der aufgenommenen Emission oder der aufgenommenen Emissionen während der Zeitdauer von fünf Sekunden,
- Überprüfen, ob die Werteschwankungen der aufgenommenen Emission oder der aufgenommenen Emissionen während der Zeitdauer von fünf Sekunden weniger als 5 Prozent betragen.
Gegebenenfalls ist vorgesehen, dass folgende Emissionswerte gemessen werden:
- CO₂-Konzentration,
- und/oder Sauerstoff-Konzentration,
- und/oder Stickstoffoxid-Konzentration, insbesondere NO-Konzentration und/oder NO₂-Konzentration,
- und/oder Partikelanzahl,
- und/oder NH₃-Konzentration,
- und/oder HC-Konzentration,
- und/oder Kohlenmonoxid-Konzentration.
Gegebenenfalls ist vorgesehen, dass zu folgenden Abgaskomponenten Abgaskennwerte bestimmt werden:
- Stickstoffoxide-Konzentration, insbesondere NO-Konzentration und/oder NO₂-Konzentration,
- und/oder Partikelanzahl,
- und/oder NH₃-Konzentration,
- und/oder HC-Konzentration,
- und/oder Kohlenmonoxid-Konzentration.
Gegebenenfalls ist vorgesehen, dass das Messen der Emission der mindestens einen Abgaskomponente im Abgas des Prüflings, das Bestimmen der Luftverhältniszahl aus der Abgaszusammensetzung und das gegebenenfalls durchgeführte Messen der Abgastemperatur mit dem Messsystem durchgeführt wird, wobei das Messsystem ein vom Prüfling unabhängig messenden Messsystem ist.
Gegebenenfalls ist vorgesehen, dass das Bestimmen der Luftverhältniszahl aus der Abgaszusammensetzung:
- nach dem Atombilanzverfahren aus den kohlenstoffhaltigen Abgaskomponenten, gegebenenfalls unter Berücksichtigung des Sauerstoffgehalts, des Abgases,
- und/oder nach der Restsauerstoffmethode, unter Verwendung einer Lambda-Sonde erfolgt.
Gegebenenfalls ist vorgesehen, dass das Messen der Emission mindestens einer Abgaskomponente im Abgas des Prüflings und/oder das Messen des Emissionswertes der mindestens einen Abgaskomponente
- durch Abzweigen eines Teilvolumenstroms des von dem Prüfling abgegebenen Abgases mittels einer in die Abgasaustrittsöffnung des Prüflings eingeführten Abgassonde
- und durch Leiten des Teilvolumenstroms in das Messsystem erfolgt.
Gegebenenfalls ist vorgesehen, dass das Messen der Emission mindestens einer Abgaskomponente im Abgas des Prüflings und/oder das Messen des Emissionswertes der mindestens einen Abgaskomponente
- durch Abzweigen eines Teilvolumenstroms des von dem Prüfling abgegebenen Abgases
- und durch Leiten des Teilvolumenstroms in das Messsystem mittels unbeheizter Abgasentnahmetechnik erfolgt.
Gegebenenfalls ist vorgesehen, dass das Messen der Emission mindestens einer Abgaskomponente im Abgas des Prüflings und/oder das Messen des Emissionswertes der mindestens einen Abgaskomponente
- durch Abzweigen eines Teilvolumenstroms des von dem Prüfling abgegebenen Abgases mittels einer in die Abgasaustrittsöffnung des Prüflings eingeführten Abgassonde
- und durch Leiten des Teilvolumenstroms in ein Messsystem erfolgt,
- und dass die Temperaturmessung der Abgastemperatur über einen an der Abgassonde angeordneten Temperatursensor erfolgt.
Gegebenenfalls ist vorgesehen, dass das Messen der Emission mindestens einer Abgaskomponente im Abgas des Prüflings und/oder das Messen des Emissionswertes der mindestens einen Abgaskomponente nach Abscheidung des Wasserdampfgehaltgehaltes des Abgases erfolgt.
Gegebenenfalls ist vorgesehen, dass ein Abgasanalysegerät des Messsystems mit einer Ansprechzeit von weniger als zehn Sekunden und einer Anstiegszeit von weniger als fünf Sekunden zur Messung der Emissionen verwendet wird.
Gegebenenfalls ist vorgesehen, dass der Prüfling vor dem Beginn der Messung konditioniert wird, sodass insbesondere die Abgastemperatur oberhalb eines vorbestimmten Temperaturschwellenwertes liegt und/oder in einem vorbestimmten Temperaturfenster liegt.
Gegebenenfalls ist vorgesehen, dass der erste Betriebszustand jenem Betriebszustand entspricht, in dem der Motor konditioniert wird. Bevorzugt ist vorgesehen, dass der Prüfling in diesem ersten konstanten Betriebsmodus und zur Konditionierung:
- im Leerlauf bei konstanter erhöhter Leerlaufdrehzahl,
- und/oder im Leerlauf bei konstanter auf 20% bis 40%, insbesondere auf 30%, der Drehzahl der maximalen Leistung des Prüflings erhöhter Leerlaufdrehzahl,
- und/oder bei, gegenüber dem anderen konstanten Betriebsmodus, konstant erhöhter Last betrieben wird. Dadurch kann direkt im Anschluss an die Konditionierung mit der ersten Verifizierung und der ersten Messung begonnen werden, insbesondere ohne die Motorlast zu verändern. Gegebenenfalls ist vorgesehen, dass der Prüfling im zweiten konstanten Betriebsmodus im Leerlauf bei konstanter Leerlaufdrehzahl betrieben wird. Gegebenenfalls ist vorgesehen, dass zur Überprüfung des mindestens einen Abgaskennwerts des Prüflings ein Referenzkennwert, insbesondere ein fahrzeugspezifischer Schadstoffgrenzwert, bereitgestellt und mit dem mindestens einen ermittelten Abgaskennwert verglichen wird, oder dass zur Überprüfung der ermittelten Abgaskennwerte des Prüflings Referenzkennwerte, insbesondere fahrzeugspezifische Schadstoffgrenzwerte, bereitgestellt und mit den ermittelten Abgaskennwerten verglichen werden.
Gegebenenfalls ist vorgesehen:
- dass der erste konstante Betriebszustand jenem Betriebszustand entspricht, in dem der Motor konditioniert wird,
- dass der Prüfling in diesem ersten konstanten Betriebsmodus und zur Konditionierung:
- im Leerlauf bei konstanter erhöhter Leerlaufdrehzahl,
- und/oder im Leerlauf bei konstanter auf 20% bis 40%, insbesondere auf 30%, der Drehzahl der maximalen Leistung des Prüflings erhöhter Leerlaufdrehzahl,
- und/oder bei, gegenüber dem anderen konstanten Betriebsmodus, konstant erhöhter Last betrieben wird,
- dass direkt im Anschluss an die Konditionierung die Verifizierung des ersten konstanten Betriebsmodus und anschließend die erste Messung vorgenommen wird, wobei beim Übergang zwischen Konditionierung und erstem konstantem Betriebsmodus die Last unverändert bleibt,
und dass der Prüfling anschließend gegebenenfalls im zweiten konstanten Betriebsmodus, im Leerlauf bei konstanter Leerlaufdrehzahl, betrieben wird.

Die Abfolge bzw. Reihenfolge der beiden Betriebsmodi kann je nach Anwendungsfall angepasst oder vertauscht werden. Ferner kann gegebenenfalls auch nur einer beiden Betriebsmodi angewandt werden. Gegebenenfalls kann auch ein dritter Betriebsmodus vorgesehen sein. Gegebenenfalls können auch weitere Betriebsmodi vorgesehen sein.

Die Erfindung betrifft insbesondere ein universelles, rasch und effizient durchzuführendes, Kurztestverfahren zur Überprüfung der gasförmigen und partikelförmigen Schadstoffe, bevorzugt bezogen auf das Luftverhältnis des Abgases.

Insbesondere neue Abgasreinigungstechnologien zur Reduktion von Stickstoffoxiden und partikelförmigen Abgasbestandteilen bedürfen einer adäquaten Überprüfungsmethodik um sicherzustellen, dass diese sowohl in Betrieb sind als auch eine bestimmte Mindestfunktion erfüllen.
Das vorliegende Verfahren dient bevorzugt der Überprüfung des Abgasverhaltens von Verbrennungskraftmaschinen im Rahmen der periodischen Inspektion als auch zur Detektion von hoch emittierenden Verbrennungskraftmaschinen für mobile oder stationäre Anwendungen im realen Betrieb. Prüflinge im Sinne der Erfindung können beispielsweise Kraftfahrzeuge, Arbeitsmaschinen, landwirtschaftliche Zugfahrzeuge, Lokomotiven und/oder Schiffe sein.
Das Verfahren zeichnet sich auch gegebenenfalls dadurch aus, dass es für sämtliche übliche Kraftstoffarten wie Benzin, Diesel, Erdgas, Methan (CNG und LNG), Flüssiggas (LPG) und vergleichbare Biokraftstoffe sowie synthetische Kraftstoffe eingesetzt werden kann. Weiters ist es bevorzugt universell für Fremdzündungsmotoren (Ottomotor), Selbstzündungsmotoren (Dieselmotor) und Turbinen anwendbar.
Das Messverfahren zeichnet sich gegebenenfalls dadurch aus, dass es keine Datenverbindung zum Messobjekt (Feldbussystem) benötigt und somit eine unabhängige Wirkprüfung vorgenommen werden kann.
Das Messverfahren beruht bevorzugt darauf, dass bei einem oder mehreren definierten Betriebspunkten der Verbrennungskraftmaschine die Konzentration der Stickstoffoxide oder/und des Stickstoffmonoxids oder/und des Ammoniaks oder/und die Partikelanzahl relativ zum Luftverhältnis der Verbrennungskraftmaschine bestimmt werden. Die Bestimmung des Luftverhältnisses erfolgt insbesondere aus der Abgaszusammensetzung mittels Atombilanzverfahren sämtlicher Abgaskomponenten oder gegebenenfalls mittels Restsauerstoffbestimmung des vollständig oxidierten Abgases.
Die Konzentrationen der Stickstoffoxide und die Partikelanzahl werden auf ein einheitliches Luftverhältnis, vorzugsweise Lambda=1,00 umgerechnet womit eine gute Vergleichbarkeit verschiedener Arbeitsverfahren und Betriebsstrategien von Verbrennungskraftmaschinen erreicht wird.
Für dieses Luftverhältnis können Grenzwerte für die zu messenden Abgaskomponenten in Abhängigkeit von Antriebsart und gesetzlichen Abgasstandard festgelegt werden.
Damit kann eine einheitliche Prüfung von neuen als auch älteren Verbrennungskraftmaschinen vorgenommen werden.
Eine Probennahme kann beispielsweise aus dem Endrohr der Abgasanlage der Verbrennungskraftmaschine, bevorzugt mit unbeheizter Abgasentnahmetechnik, erfolgen. Eine etwaige Ausscheidung des im Abgas enthaltenen Wassers kann in der Bilanz, insbesondere der Molbilanz, berücksichtigt werden.
An der Entnahmeposition der Abgassonde kann außerdem eine Temperaturmessung des Abgasstroms vorgenommen werden um sicherzustellen, dass die für Abgasreinigungsverfahren notwendige Mindesttemperatur des Abgases erreicht wird. Hierfür liegen bereits bekannte Referenzwerte vor.
Das Abgasanalysegerät soll bevorzugt über eine Ansprechzeit von weniger als zehn Sekunden und eine Anstiegszeit von weniger als fünf Sekunden verfügen. Damit werden ein Erkennen von allfälliger Drift des Messobjekts und eine zügige Durchführung der Messung ermöglicht.

Die gesamte Abgasmessung kann im Stand des Fahrzeugs oder auf einem Rollenprüfstand in weniger als fünf Minuten durchführt werden und ermöglicht eine wiederkehrende Kontrolle der wichtigen Abgaskomponenten, insbesondere der Stickstoffoxide und/oder der Feinpartikel. Darüber hinaus kann durch die eingesetzte Luftverhältnisbestimmung Lambda bei Dieselmotoren eine Überprüfung der Motoreinstellung vorgenommen werden.
Das Verfahren ist schonend für den Verbrennungsmotor und die Umwelt, da keine freie Motorbeschleunigung bis zur Höchstdrehzahl bei Dieselmotoren erforderlich ist.
Das Messverfahren ist bevorzugt vom Messobjekt unabhängig, womit Softwaremanipulationen keinen Einfluss auf das Messergebnis haben können.

Das Messen des Emissionswerts oder der Emissionswerte der mindestens einen Abgaskomponente und das Bestimmen der Luftverhältniszahl(en) aus der Abgaszusammensetzung während des verifizierten konstanten Betriebsmodus, und insbesondere das Messen eines Konzentrationswerts einer Abgaskomponente oder eines Partikelanzahlwerts kann durch eine punktuelle Messung oder durch Aufnehmen und Mitteln mehrerer Messwerte erfolgen.

Ein Messsystem zur Durchführung des erfindungsgemäßen Verfahrens umfasst bevorzugt eine Abgassonde, die in die Abgasaustrittsöffnung, insbesondere in das Endrohr, des Prüflings eingeführt werden kann, um einen Teilvolumenstrom des Prüflings aufzunehmen. Gegebenenfalls umfasst das Messsystem zur Durchführung des erfindungsgemäßen Verfahrens einen Abgasvollstromadapter, der an der Austrittöffnung ebenfalls einen Teilstrom entnimmt. Der entnommene Abgasstrom kann mehreren Sensoren zur Bestimmung der Abgaskomponenten zugeführt werden.

Beim erfindungsgemäßen Verfahren wird bevorzugt ein Messsystem eingesetzt, das Sensoren zur Messung der CO₂-Konzentration, der Sauerstoff-Konzentration, der Stickstoffoxid-Konzentration - NO, NO₂ und/oder NOₓ, der Partikelanzahl, gegebenenfalls der NH₃-Konzentration, gegebenenfalls der HC-Konzentration und der Kohlenmonoxid-Konzentration im Abgas des Prüflings umfasst.

Beim erfindungsgemäßen Verfahren ist bevorzugt vorgesehen, dass Abgaskennwerte zur Stickstoffoxide-Konzentration, zur Partikelanzahl, gegebenenfalls zur NH₃-Konzentration gegebenenfalls zur HC-Konzentration und zur Kohlenmonoxid-Konzentration bestimmt werden.

In weiterer Folge wird eine Liste möglicher Sensoren bzw. Sensorprinzipien zur Ermittlung der angegebenen Abgaskomponenten angeführt. Es handelt sich dabei um exemplarische Ausführungsformen von Sensoren zur Bestimmung der gegebenenfalls notwendigen Emissionswerte.

### Partikelanzahl PN:

Diffusion size classifier for nanoparticle measurement; Resisitve Partikel Sensoren; Electrical charging Particle Sensor; Photo Acoustic Soot Sensor.

Die Bestimmung kann wahlweise im mit partikelfreier Umgebungsluft verdünnten Abgas erfolgen.

### Stickstoffoxide NOₓ, NO:

Chemilumineszenz Detektor - CLD; Nicht dispersive Ultra-Violet Technologie - NDUV; Zweikammer Zirkoniumdioxid Sensor; Galvanischer Sensor; Seitenband von Infrarot.

### Kohlendioxid CO₂, Kohlenmonoxid CO:

NDIR: Nichtdispersiver Infrarotsensor; Galvanischer Sensor.

Kohlenwasserstoffe HC:

Flammenionisationsdetektor FID; NDIR; Wärmetönung.

### Sauerstoff O₂:

Galvanischer Sensor (bestimmter Typ einer Brennstoffzelle); Paramagnetisches Wechseldruckverfahren

### Amoniak NH₃:

Non-equilibrium electrochemical Alumina / Zirconia composite Sensor

### Abgastemperatur:

K-Typ Thermoelement; Resistiver Temperatursensor; Halbleiter Temperatursensor.

Die Bestimmung des Lambdawertes bei dem vorliegenden Verfahren kann aus der Abgaszusammensetzung erfolgen. Hierzu sind beispielsweise folgende bekannte Verfahren bzw. Methoden geeignet (vergleiche: E. Pucher: "Überprüfung von im Verkehr befindlichen Katalysatorfahrzeugen, VDI-Fortschritt-Berichte, Reihe 12, Nr, 121, Düsseldorf,1988.):

### Atombilanzverfahren :

Basierend auf der Messung der kohlenstoffhaltigen Abgaskomponenten (CO₂, CO und HC) kann bei bekannter Kraftstoffzusammensetzung das Luftverhältnis Lambda aus der Abgaszusammensetzung berechnet werden. Zieht man noch die Abgaskomponente Sauerstoff hinzu wird die Güte des Messergebnisses bei Luftverhältnissen über λ = 1 (Abgasverdünnung) nochmals präziser und von der Kraftstoffzusammensetzung unabhängiger. Als beispielhafte Berechnungsgleichung sei jene nach Brettschneider genannt.

### Restsauerstoffmessmethode:

Das Verhältnis von real angesaugter Luftmasse des Motors im Verhältnis zur stöchiometrischen Luftmasse lässt sich auch mittels einer Restsauerstoffmessung im Abgas, bzw. der Abgaswolke bestimmen. Typischer Weise werden dafür Breitband Lambdamesssonden, die nach dem Sauerstoffionen Pumpprinzip arbeiten eingesetzt. Dabei ist der Sauerstofffluss in, bzw. aus einer kleinen λ = 1 Referenzkammer das Maß für die reale Verdünnung der Gasprobe (vergleiche: PUCHER, E.: Abgasemissionen - Gesetzliche Vorschriften, Abgasmesstechnik, Schadstoffe und ihre Entstehung, Minderung von Schadstoffen. Handbuch Verbrennungsmotor - Grundlagen, Komponenten, Systeme, Perspektiven. Basshuysen, R.; Schäfer, F. (Herausgeber) ATZ-MTZ Fachbuch, Dritte vollständig überbearbeitete und erweiterte Auflage. ISBN: 3-528-23933-6. Vieweg Verlag 2005).

Gegebenenfalls kann die Messung der Abgaszusammensetzung der Abgaskonzentration nach Abscheidung eines etwaigen Wasserdampfgehaltes erfolgen. Die Messung der Abgaskonzentrationen erfolgt dabei vorzugsweise nach Abscheidung des Wasserdampfgehaltes des Messgases bei Umgebungstemperatur. Sollte eine Umrechnung auf feuchtes Abgas gewünscht werden, sind die Messwerte bei Lambda=1 beispielsweise um zehn Prozent zu reduzieren.

Bevorzugt wird eine Berechnung der auf Lambda = 1 bezogenen Abgaskonzentrationen durchgeführt. Zu diesem Zweck wird der Messwert mit dem Lambdawert multipliziert. Damit wird der unterschiedliche Luftbedarf verschiedener Motor- und Verbrennungskonzepte auf einen vergleichbaren Lambdawert normiert und die Volumskonzentrationen der Schadstoffe werden direkt vergleichbar. Motorkonzepte mit Luftüberschuss, wie Dieselmotoren, Ottomotoren mit magerer Verbrennung und Gasturbinen würden ansonsten durch die motorimmanente Verdünnung niedrigere Konzentrationen ausweisen.

Bevorzugt ist das Verfahren derart ausgestaltet, dass die Messungen mit einem vom Prüfling unabhängig messenden Messsystem durchgeführt werden. Dies bedeutet insbesondere, dass zwischen dem Messsystem und dem Prüfling keine Datenverbindung besteht. Eine Verbindung zwischen Messsystem und Prüfling besteht jedenfalls über die Entnahme des Abgases des Prüflings und der Analyse des Abgases des Prüflings durch das Messsystem. Jedoch werden bevorzugt vom Messsystem keine Daten berücksichtigt, die von Prüflings eigenen Sensoren, wie beispielsweise von einem Luftmassenmesser, von einer Lambdasonde oder ähnlichen Prüflings eigenen Sensoren ermittelt werden, um eine unabhängige Wirkprüfung durchführen zu können.

In weiterer Folge wird das Verfahren anhand eines exemplarischen Ausführungsbeispiels für das Messverfahren an einem Pkw weiter beschrieben, wobei das Verfahren insbesondere folgende Schritte umfasst:
- Bereitstellung des Abgasmessgeräts,
- Bereitstellung des betriebswarmen Fahrzeugs samt Zulassungsschein zur Ermittlung der Antriebsdrehzahl bei maximaler Motorleistung sowie der Art und des Emissionsstandards der Antriebsmaschine,
- Datenbankabfrage der fahrzeugspezifischen Schadstoffgrenzwerte für den Kurztest,
- Montage der Abgassonde mit integrierter oder zusätzlicher Abgastemperaturmessung am Auspuff des Fahrzeugs,
- Konditionierung des zu prüfenden und bereits betriebswarmen Pkw um das Erreichen der mindestens erforderlichen Abgastemperatur für die Funktionsfähigkeit des Abgasreinigungssystems sicherzustellen, wobei dies beispielsweise durch erhöhte Leerlaufdrehzahl bei 30 bis 40 Prozent der Antriebsdrehzahl bei maximaler Motorleistung, bis zum Erreichen einer Abgastemperatur am Auspuff von mindestens 200 Grad Celsius erfolgt.
- Sofort anschließend bei dieser erhöhten Leerlaufdrehzahl erfolgt die Messung der Abgaskonzentrationen von CO₂, Sauerstoff und Stickstoffoxide und der Partikelanzahl sowie wahlweise NH₃ und/oder Kohlenmonoxid, wobei die Schadstoffkonzentrationen von Stickstoffoxiden, Partikelanzahl sowie wahlweise NH₃ und/oder Kohlenmonoxid rechnerisch auf Lambda = 1,00 bezogen werden, wobei die Dauer der Messung 5 Sekunden nach Erreichen des Beharrungswerts der Messgrößen beträgt und wobei die Änderung der Messergebnisse in diesem Zeitraum weniger als 10 Prozent betragen muss. Der Absolutwert der Messgrößen muss unter dem fahrzeugspezifischen Grenzwert liegen. Ansonsten wird ein weiteres Mal mit denselben Vorgaben gemessen. Werden die Sollvorgaben wieder nicht erreicht gilt der Test als nicht bestanden. Das Fahrzeug ist von einer autorisierten Werkstätte einem herstellerspezifischem Inspektions- und Wartungsprogramm zu unterziehen. Fahrzeuge, die den Test bei erhöhter Leerlaufdrehzahl bestanden haben, werden einem Test bei Leerlaufdrehzahl unterzogen, insofern vorhandene Start/Stop Einrichtungen für den Motorbetrieb im Stand durch einfache Bedienung vom Fahrersitz aus deaktiviert werden können.
Die Dauer der Messung beträgt 5 Sekunden nach Erreichen des Beharrungswerts der Messgrößen. Die Änderung der Messergebnisse muss in diesem Zeitraum weniger als 10 Prozent betragen. Der Absolutwert der Messgrößen muss unter einem fahrzeugspezifischen Grenzwert liegen. Ansonsten wird ein weiteres Mal mit denselben Vorgaben gemessen. Werden die Sollvorgaben wieder nicht erreicht gilt der Test als nicht bestanden und muss abgebrochen werden. Das Fahrzeug ist von einer autorisierten Werkstätte einem herstellerspezifischem Inspektions- und Wartungsprogramm zu unterziehen. Für Fahrzeuge, die auch den Leerlauftest bestanden haben gilt der Gesamttest als bestanden.

In weiterer Folge wird das Verfahren anhand eines exemplarischen Ausführungsbeispiels für das Messverfahren an einem Nutzfahrzeug, beispielsweise an einem Lkw oder Bus, oder an einer landwirtschaftlichen Zugmaschine beschrieben, wobei das Verfahren insbesondere folgende Schritte umfasst:
- Bereitstellung des Abgasmessgeräts,
- gegebenenfalls Bereitstellung des betriebswarmen Fahrzeugs samt Zulassungsschein zur Ermittlung der Antriebsdrehzahl bei maximaler Motorleistung sowie der Art und des Emissionsstandards der Antriebsmaschine,
- Datenbankabfrage der fahrzeugspezifischen Schadstoffgrenzwerte für das erfindungsgemäße Verfahren, das insbesondere als Kurztest ausgeführt wird,
- Montage der Abgassonde mit Integrierer oder zusätzlicher Abgastemperaturmessung am Auspuff des Fahrzeugs,
- gegebenenfalls Konditionierung des zu prüfenden und bereits betriebswarmen Fahrzeugs um das Erreichen der mindestens erforderlichen Abgastemperatur für die Funktionsfähigkeit des Abgasreinigungssystems sicherzustellen. Dies erfolgt beispielsweise durch einen erhöhten Lastzustand. Der erhöhte Lastzustand kann beispielsweise durch eine erhöhte Leerlaufdrehzahl bei 30 bis 40 Prozent der Antriebsdrehzahl bei maximaler Motorleistung erzeugt werden, bis eine Abgastemperatur am Auspuff von mindestens 200 Grad Celsius vorliegt. Alternativ oder zusätzlich kann, falls eine erhöhte Motordrehzahl im Stillstand des Fahrzeugs nicht möglich ist, eine erhöhte Last durch hinzuschalten eines Nebenaggregats erzeugt werden. Dafür kommen beispielsweise folgende Nebenaggregate in Frage: Klimaanlage, Kühlaggregat, Nebenabtrieb für Hebezeuge, Nebenabtrieb für Kippmechanismen, Nebenabtrieb für Drehmechanismen und/oder Nebenabtrieb für Sammelmaschinen. Diese Nebenaggregate erzeugen bei Nutzfahrzeugen eine typische Last von bis zu 30 Kilowatt.
- Es erfolgt sofort anschließend bei dem im vorangegangenen Schritt gewählten Betriebszustand des Motors die Messung der Abgaskonzentrationen von CO2, Sauerstoff, Stickstoffoxide und Partikelanzahl sowie wahlweise NH3 und/oder Kohlenmonoxid. Die Schadstoffkonzentrationen von Stickstoffoxiden, Partikelanzahl sowie wahlweise NH3 und/oder Kohlenmonoxid werden rechnerisch auf Lambda = 1,00 bezogen.
- Die Dauer der Messung beträgt 5 Sekunden nach Erreichen des Beharrungswerts der Messgrößen. Die Änderung der Messergebnisse muss in diesem Zeitraum weniger als 10 Prozent betragen.
- Der Absolutwert der Messgrößen muss unter dem fahrzeugspezifischen Grenzwert liegen. Ansonsten wird ein weiteres Mal mit denselben Vorgaben gemessen.
- Werden die Sollvorgaben wieder nicht erreicht, so gilt der Test als nicht bestanden und muss abgebrochen werden.
Das Fahrzeug ist von einer autorisierten Werkstätte einem herstellerspezifischem Inspektions- und Wartungsprogramm zu unterziehen.
- Fahrzeuge, die den Test bei erhöhtem Lastzustand bestanden haben, werden einem Test bei Leerlaufdrehzahl unterzogen, insofern vorhandene Start/Stop Einrichtungen für den Motorbetrieb im Stand durch einfache Bedienung vom Fahrersitz aus deaktiviert werden können.
- Die Dauer der Messung beträgt 5 Sekunden nach Erreichen des Beharrungswerts der Messgrößen. Die Änderung der Messergebnisse muss in diesem Zeitraum weniger als 10 Prozent betragen. Der Absolutwert der Messgrößen muss unter einem fahrzeugspezifischen Grenzwert liegen. Ansonsten ein weiteres Mal mit denselben Vorgaben messen. Werden die Sollvorgaben wieder nicht erreicht gilt der Test als nicht bestanden und muss abgebrochen werden. Das Fahrzeug ist von einer autorisierten Werkstätte einem herstellerspezifischem Inspektions- und Wartungsprogramm zu unterziehen.
Für Fahrzeuge, die auch den Leerlauftest bestanden haben, gilt der Gesamttest als bestanden.

## Patentansprüche

1. Verfahren zur Bestimmung und Überprüfung mindestens eines Abgaskennwerts eines Prüflings unter Verwendung eines Messsystems, wobei der Prüfling zumindest eine Verbrennungskraftmaschine und gegebenenfalls eine der Verbrennungskraftmaschine nachgeordnete Abgasnachbehandlungsanlage enthält, umfassend folgende Schritte:
- Versetzen des Prüflings in einen ersten konstanten Betriebsmodus,
- Verifizieren, ob ein konstanter Betriebsmodus vorliegt, durch Messen der Emission mindestens einer Abgaskomponente und/oder der Luftverhältniszahl im Abgas des Prüflings und durch Erfassen und/oder Überwachen der Werteschwankungen der aufgenommenen Emission oder der aufgenommenen Emissionen während des Betriebs des Prüflings im ersten konstanten Betriebsmodus, das Verfahren **gekennzeichnet durch**
- Messen eines ersten Emissionswertes der mindestens einen Abgaskomponente und Bestimmen einer ersten Luftverhältniszahl aus der Abgaszusammensetzung während des verifizierten ersten konstanten Betriebsmodus, wobei der Emissionswert insbesondere ein Konzentrationswert einer Abgaskomponente oder ein Partikelanzahlwert ist,
- Bestimmen eines ersten Abgaskennwertes **durch** Umrechnen des ersten Emissionswertes auf eine vordefinierte Luftverhältniszahl oder auf eine stöchiometrische Verbrennung **durch** Multiplizieren des ersten Emissionswertes mit der ersten Luftverhältniszahl.

2. Verfahren nach Anspruch 1 umfassend folgende Schritte:
- Versetzen des Prüflings in einen zweiten konstanten Betriebsmodus,
- Verifizieren, ob ein konstanter Betriebsmodus vorliegt, durch Messen der Emission mindestens einer Abgaskomponente und/oder der Luftverhältniszahl und durch Erfassen und/oder Überwachen der Werteschwankungen der aufgenommenen Emission oder der aufgenommenen Emissionen während des Betriebs des Prüflings im zweiten konstanten Betriebsmodus,
- Messen eines zweiten Emissionswertes der mindestens einen Abgaskomponente und Bestimmen einer zweiten Luftverhältniszahl aus der Abgaszusammensetzung während des verifizierten zweiten konstanten Betriebsmodus, wobei der Emissionswert insbesondere ein Konzentrationswert einer Abgaskomponente oder ein Partikelanzahlwert ist,
- Bestimmen eines zweiten Abgaskennwertes durch Umrechnen des zweiten Emissionswertes auf eine vordefinierte Luftverhältniszahl oder auf eine stöchiometrische Verbrennung durch Multiplizieren des zweiten Emissionswertes mit der zweiten Luftverhältniszahl.

3. Verfahren nach einem der Ansprüche 1 oder 2, **dadurch gekennzeichnet, dass** der Prüfling im ersten konstanten Betriebsmodus oder im zweiten konstanten Betriebsmodus, im Leerlauf bei konstanter Leerlaufdrehzahl betrieben wird.

4. Verfahren nach Anspruch 3, **dadurch gekennzeichnet,**
- **dass** der Prüfling in dem **anderen** konstanten Betriebsmodus, insbesondere in dem zweiten konstanten Betriebsmodus:
- im Leerlauf bei konstanter erhöhter Leerlaufdrehzahl,
- und/oder im Leerlauf bei konstanter auf 20% bis 40%, insbesondere auf 30%, der Drehzahl der maximalen Leistung des Prüflings erhöhter Leerlaufdrehzahl,
- und/oder bei, gegenüber dem anderen konstanten Betriebsmodus, insbesondere gegenüber dem zweiten konstanten Betriebsmodus, konstant erhöhter Last betrieben wird,
- **und/oder dass** der Prüfling ein Fahrzeug mit einem Verbrennungsmotor ist, und wobei der Prüfling, zum Herstellen eines konstanten Betriebsmodus, **insbesondere** zum Herstellen des zweiten konstanten Betriebsmodus, mit einer **gegenüber dem anderen** konstanten Betriebszustand erhöhten prüflingseigenen Last beaufschlagt wird.

5. Verfahren nach einem der Ansprüche 2 bis 4, **dadurch gekennzeichnet,**
- **dass** der Prüfling ein Fahrzeug mit einem Verbrennungsmotor ist, wobei der Prüfling, zum Herstellen eines konstanten Betriebsmodus, **insbesondere** zum Herstellen des zweiten konstanten Betriebsmodus, mit einer **gegenüber dem anderen** konstanten Betriebszustand erhöhten prüflingseigenen Last beaufschlagt wird, und wobei die erhöhte prüflingseigene Last
- eine erhöhte Motorreibung bei erhöhter Drehzahl,
- und/oder ein erhöhter Abgasgegendruck bei erhöhter Motordrehzahl
- und/oder eine erhöhte Belastung durch Zuschaltung mindestens eines lasterzeugenden prüflingseigenen Nebenaggregats ist,
- **und/oder dass** der Prüfling ein Fahrzeug mit einem Verbrennungsmotor ist, wobei der Prüfling, zum Herstellen eines konstanten Betriebsmodus, **insbesondere** zum Herstellen des zweiten konstanten Betriebsmodus, mit einer **gegenüber dem anderen** konstanten Betriebszustand erhöhten Last beaufschlagt wird, und wobei die erhöhte Last durch Betreiben des Prüflings auf einem Rollenprüfstand erzeugt wird.

6. Verfahren nach einem der Ansprüche 1 bis 5, **dadurch gekennzeichnet,**
- **dass** die Abgastemperatur des Prüflings gemessen wird,
- **und wobei** das Messen des ersten Emissionswertes der mindestens einen Abgaskomponente und das Bestimmen einer ersten Luftverhältniszahl aus der Abgaszusammensetzung während des verifizierten ersten konstanten Betriebsmodus, nur dann erfolgt, wenn die Abgastemperatur oberhalb eines vorbestimmten Temperaturschwellenwertes von insbesondere 200°C und/oder in einem vorbestimmten Temperaturfenster liegt,
- **und/oder wobei** das Messen des zweiten Emissionswertes der mindestens einen Abgaskomponente und das Bestimmen einer zweiten Luftverhältniszahl aus der Abgaszusammensetzung während des **verifizierten zweiten konstanten** Betriebsmodus, nur dann erfolgt, wenn die Abgastemperatur oberhalb eines vorbestimmten Temperaturschwellenwertes von insbesondere 200°C und/oder in einem vorbestimmten Temperaturfenster liegt.

7. Verfahren nach einem der Ansprüche 1 bis 6, **dadurch gekennzeichnet,**
- **dass** zum Verifizieren, ob ein konstanter Betriebsmodus vorliegt, folgende Schritte ausgeführt werden:
- Messen der Emission mindestens einer Abgaskomponente im Abgas des Prüflings über eine Zeitdauer t,
- Erfassen und/oder Überwachen der Werteschwankungen der aufgenommenen Emission oder der aufgenommenen Emissionen während der Zeitdauer t,
- Überprüfen, ob die Werteschwankungen der aufgenommenen Emission oder der aufgenommenen Emissionen während der Zeitdauer t innerhalb einer vorbestimmten maximalen Schwankungsbreite liegen,
- **und/oder dass** zum Verifizieren, ob ein konstanter Betriebsmodus vorliegt, folgende Schritte ausgeführt werden:
- Messen der Emission mindestens einer Abgaskomponente im Abgas des Prüflings über eine Zeitdauer von fünf Sekunden,
- Erfassen und/oder Überwachen der Werteschwankungen der aufgenommenen Emission oder der aufgenommenen Emissionen während der Zeitdauer von fünf Sekunden,
- Überprüfen, ob die Werteschwankungen der aufgenommenen Emission oder der aufgenommenen Emissionen während der Zeitdauer von fünf Sekunden weniger als 5 Prozent betragen.

8. Verfahren nach einem der Ansprüche 1 bis 7, **dadurch gekennzeichnet,**
- **dass** folgende Emissionswerte gemessen werden:
- CO₂-Konzentration,
- und/oder Sauerstoff-Konzentration,
- und/oder Stickstoffoxid-Konzentration,
- und/oder Partikelanzahl,
- und/oder NH₃-Konzentration,
- und/oder HC-Konzentration,
- und/oder Kohlenmonoxid-Konzentration,
- **und/oder dass** zu folgenden Abgaskomponenten Abgaskennwerte bestimmt werden:
- Stickstoffoxide-Konzentration,
- und/oder Partikelanzahl,
- und/oder NH₃-Konzentration,
- und/oder HC-Konzentration,
- und/oder Kohlenmonoxid-Konzentration.

9. Verfahren nach einem der Ansprüche 1 bis 8, **dadurch gekennzeichnet, dass** das Messen der Emission der mindestens einen Abgaskomponente im Abgas des Prüflings, das Bestimmen der Luftverhältniszahl aus der Abgaszusammensetzung und das gegebenenfalls durchgeführte Messen der Abgastemperatur mit dem Messsystem durchgeführt wird, wobei das Messsystem ein vom Prüfling unabhängig messenden Messsystem ist.

10. Verfahren nach einem der Ansprüche 1 bis 9, **dadurch gekennzeichnet, dass** das Bestimmen der Luftverhältniszahl aus der Abgaszusammensetzung:
- nach dem Atombilanzverfahren aus den kohlenstoffhaltigen Abgaskomponenten, gegebenenfalls unter Berücksichtigung des Sauerstoffgehalts, des Abgases,
- und/oder nach der Restsauerstoffmethode, unter Verwendung einer Lambda-Sonde erfolgt.

11. Verfahren nach einem der Ansprüche 1 bis 10, **dadurch gekennzeichnet,**
- **dass** das Messen der Emission mindestens einer Abgaskomponente im Abgas des Prüflings und/oder das Messen des Emissionswertes der mindestens einen Abgaskomponente
- durch Abzweigen eines Teilvolumenstroms des von dem Prüfling abgegebenen Abgases mittels einer in die Abgasaustrittsöffnung des Prüflings eingeführten Abgassonde
- und durch Leiten des Teilvolumenstroms in das Messsystem erfolgt,
- **und/oder dass** das Messen der Emission mindestens einer Abgaskomponente im Abgas des Prüflings und/oder das Messen des Emissionswertes der mindestens einen Abgaskomponente
- durch Abzweigen eines Teilvolumenstroms des von dem Prüfling abgegebenen Abgases
- und durch Leiten des Teilvolumenstroms in das Messsystem mittels unbeheizter Abgasentnahmetechnik erfolgt,
- **und/oder dass** das Messen der Emission mindestens einer Abgaskomponente im Abgas des Prüflings und/oder das Messen des Emissionswertes der mindestens einen Abgaskomponente
- durch Abzweigen eines Teilvolumenstroms des von dem Prüfling abgegebenen Abgases mittels einer in die Abgasaustrittsöffnung des Prüflings eingeführten Abgassonde
- und durch Leiten des Teilvolumenstroms in ein Messsystem erfolgt,
- und wobei die Temperaturmessung der Abgastemperatur über einen an der Abgassonde angeordneten Temperatursensor erfolgt.

12. Verfahren nach einem der Ansprüche 1 bis 11, **dadurch gekennzeichnet,**
- **dass** das Messen der Emission mindestens einer Abgaskomponente im Abgas des Prüflings und/oder das Messen des Emissionswertes der mindestens einen Abgaskomponente nach Abscheidung des Wasserdampfgehaltgehaltes des Abgases erfolgt,
- **und/oder dass** ein Abgasanalysegerät des Messsystems mit einer Ansprechzeit von weniger als zehn Sekunden und einer Anstiegszeit von weniger als fünf Sekunden zur Messung der Emissionen verwendet wird.

13. Verfahren nach einem der Ansprüche 1 bis 12, **dadurch gekennzeichnet, dass** der Prüfling vor dem Beginn der Messung konditioniert wird, sodass insbesondere die Abgastemperatur oberhalb eines vorbestimmten Temperaturschwellenwertes liegt und/oder in einem vorbestimmten Temperaturfenster liegt.

14. Verfahren nach einem der Ansprüche 1 bis 13, **dadurch gekennzeichnet,**
- **dass** zur Überprüfung des mindestens einen Abgaskennwerts des Prüflings ein Referenzkennwert, insbesondere ein fahrzeugspezifischer Schadstoffgrenzwert, bereitgestellt und mit dem mindestens einen ermittelten Abgaskennwert verglichen wird,
- oder dass zur Überprüfung der ermittelten Abgaskennwerte des Prüflings Referenzkennwerte, insbesondere fahrzeugspezifische Schadstoffgrenzwerte, bereitgestellt und mit den ermittelten Abgaskennwerten verglichen werden.

15. Verfahren nach einem der Ansprüche 1 bis 14, **dadurch gekennzeichnet,**
- **dass** der erste konstante Betriebszustand jenem Betriebszustand entspricht, in dem die **Verbrennungskraftmaschine** konditioniert wird,
- **dass** der Prüfling in diesem ersten konstanten Betriebsmodus und zur Konditionierung:
- im Leerlauf bei konstanter erhöhter Leerlaufdrehzahl,
- und/oder im Leerlauf bei konstanter auf 20% bis 40%, insbesondere auf 30%, der Drehzahl der maximalen Leistung des Prüflings erhöhter Leerlaufdrehzahl,
- und/oder bei, gegenüber dem anderen konstanten Betriebsmodus, konstant erhöhter Last betrieben wird,
- **dass** direkt im Anschluss an die Konditionierung die Verifizierung des ersten konstanten Betriebsmodus und anschließend die erste Messung vorgenommen werden, wobei beim Übergang zwischen Konditionierung und erstem konstantem Betriebsmodus die Last bevorzugt unverändert bleibt,
- und **dass** der Prüfling anschließend gegebenenfalls im zweiten konstanten Betriebsmodus, im Leerlauf bei konstanter Leerlaufdrehzahl, betrieben wird.

## Claims

1. A method for determining and checking at least one exhaust gas parameter of a device under test by using a measurement system, wherein the device under test contains at least one combustion engine and optionally an exhaust gas aftertreatment system downstream of the combustion engine, comprising the steps of:
- putting the device under test into a first constant operating mode,
- verifying whether a constant operating mode is achieved, by measuring the emission of at least one exhaust gas component and/or of the air ratio in the exhaust gas of the device under test and by detecting and/or monitoring the variations in the value of the sampled emission or emissions during the operation of the device under test in the first constant operating mode,
the method being **characterized by**
- measuring a first emission value of the at least one exhaust gas component and determining a first air ratio from the exhaust gas composition during the verified first constant operating mode, wherein the emission value is in particular a concentration value of an exhaust gas component or a particle number value,
- determining a first exhaust gas parameter by converting the first emission value to a predefined air ratio or to a stoichiometric combustion by multiplying the first emission value by the first air ratio.

2. The method according to claim 1, comprising the steps of:
- putting the device under test into a second constant operating mode,
- verifying whether a constant operating mode is achieved, by measuring the emission of at least one exhaust gas component and/or of the air ratio and by detecting and/or monitoring the variations in the value of the sampled emission or emissions during the operation of the device under test in the second constant operating mode,
- measuring a second emission value of the at least one exhaust gas component and determining a second air ratio from the exhaust gas composition during the verified second constant operating mode, wherein the emission value is in particular a concentration value of an exhaust gas component or a particle number value,
- determining a second exhaust gas parameter by converting the second emission value to a predefined air ratio or to a stoichiometric combustion by multiplying the second emission value by the second air ratio.

3. The method according to one of claims 1 or 2, **characterized in that** the device under test is operated at idle at a constant idle speed in the first constant operating mode or in the second constant operating mode.

4. The method according to claim 3, **characterized**
- **in that** the device under test is operated in the **other** constant operating mode, in particular in the second constant operating mode:
- at idle at a constant increased idle speed,
- and/or at idle at a constant idle speed increased to 20 % to 40 %, in particular to 30 %, of the speed of the maximum power of the device under test,
- and/or at a constantly increased load with respect to the other constant operating mode, in particular with respect to the second constant operating mode,
- **and/or in that** the device under test is a vehicle with an internal combustion engine, and wherein the device under test is subjected to an increased load specific to the device under test **with respect to the other** constant operating state in order to establish a constant operating mode, **in particular** in order to establish the second constant operating mode.

5. The method according to one of claims 2 to 4, **characterized**
- **in that** the device under test is a vehicle with an internal combustion engine, wherein the device under test is subjected to an increased load specific to the device under test **with respect to the other** constant operating state in order to establish a constant operating mode, **in particular** in order to establish the second constant operating mode, and wherein the increased load specific to the device under test is
- an increased engine friction at an increased speed,
- and/or an increased exhaust gas back pressure at an increased engine speed,
- and/or an increased load due to the connection of at least one load-generating auxiliary unit specific to the device under test,
- **and/or in that** the device under test is a vehicle with an internal combustion engine, wherein the device under test is subjected to an increased load **with respect to the other** constant operating state in order to establish a constant operating mode, **in particular** in order to establish the second constant operating mode, and wherein the increased load is generated by operating the device under test on a chassis dynamometer.

6. The method according to one of claims 1 to 5, **characterized**
- **in that** the exhaust gas temperature of the device under test is measured,
- **and wherein** the measurement of the first emission value of the at least one exhaust gas component and the determination of a first air ratio from the exhaust gas composition during the verified first constant operating mode takes place only if the exhaust gas temperature is above a predetermined temperature threshold value of in particular 200 °C and/or in a predetermined temperature window,
- **and/or wherein** the measurement of the second emission value of the at least one exhaust gas component and the determination of a second air ratio from the exhaust gas composition during the **verified second constant** operating mode takes place only if the exhaust gas temperature is above a predetermined temperature threshold value of in particular 200 °C and/or in a predetermined temperature window.

7. The method according to one of claims 1 to 6, **characterized**
- **in that** the following steps are carried out to verify whether a constant operating mode is achieved:
- measuring the emission of at least one exhaust gas component in the exhaust gas of the device under test over a period of time t,
- detecting and/or monitoring the variations in the value of the sampled emission or emissions during the period of time t,
- verifying whether the variations in the value of the sampled emission or emissions during the period of time t are within a predetermined maximum variation range,
- **and/or in that** the following steps are carried out to verify whether a constant operating mode is achieved:
- measuring the emission of at least one exhaust gas component in the exhaust gas of the device under test over a period of time of five seconds,
- detecting and/or monitoring the variations in the value of the sampled emission or emissions during the period of time of five seconds,
- verifying whether the variations in the value of the sampled emission or emissions during the period of time of five seconds are less than 5 percent.

8. The method according to one of claims 1 to 7, **characterized**
- **in that** the following emission values are measured:
- CO₂ concentration,
- and/or oxygen concentration,
- and/or nitrogen oxide concentration,
- and/or particle number,
- and/or NH₃ concentration,
- and/or HC concentration,
- and/or carbon monoxide concentration,
- **and/or in that** exhaust gas parameters are determined for the following exhaust gas components:
- nitrogen oxide concentration,
- and/or particle number,
- and/or NH₃ concentration,
- and/or HC concentration,
- and/or carbon monoxide concentration.

9. The method according to one of claims 1 to 8, **characterized in that** the measurement of the emission of the at least one exhaust gas component in the exhaust gas of the device under test, the determination of the air ratio from the exhaust gas composition and the optionally carried out measurement of the exhaust gas temperature is performed using the measurement system, wherein the measurement system is a measurement system measuring independently of the device under test.

10. The method according to one of claims 1 to 9, **characterized in that** the determination of the air ratio from the exhaust gas composition is carried out:
- according to the atomic balance method from the carbon-containing exhaust gas components of the exhaust gas, optionally taking into account the oxygen content,
- and/or according to the residual oxygen method using a lambda probe.

11. The method according to one of claims 1 to 10, **characterized**
- **in that** the measurement of the emission of at least one exhaust gas component in the exhaust gas of the device under test and/or the measurement of the emission value of the at least one exhaust gas component takes place
- by branching off a partial volume flow of the exhaust gas emitted by the device under test using an exhaust gas probe, which is inserted into the exhaust gas outlet opening of the device under test
- and by directing the partial volume flow into the measurement system,
- **and/or in that** the measurement of the emission of at least one exhaust gas component in the exhaust gas of the device under test and/or the measurement of the emission value of the at least one exhaust gas component takes place
- by branching off a partial volume flow of the exhaust gas emitted by the device under test
- and by directing the partial volume flow into the means measurement system using an unheated exhaust gas sampling technique,
- **and/or in that** the measurement of the emission of at least one exhaust gas component in the exhaust gas of the device under test and/or the measurement of the emission value of the at least one exhaust gas component takes place
- by branching off a partial volume flow of the exhaust gas emitted by the device under test using an exhaust gas probe, which is inserted into the exhaust gas outlet opening of the device under test
- and by directing the partial volume flow into a measurement system,
- and wherein the temperature measurement of the exhaust gas temperature is carried out by a temperature sensor arranged on the exhaust gas probe.

12. The method according to one of claims 1 to 11, **characterized**
- **in that** the measurement of the emission of at least one exhaust gas component in the exhaust gas of the device under test and/or the measurement of the emission value of the at least one exhaust gas component takes place after deposition of the water vapour content of the exhaust gas,
- **and/or in that** an exhaust gas analyser of the measurement system with a response time of less than ten seconds and a rise time of less than five seconds is used for the measurement of the emissions.

13. The method according to one of claims 1 to 12, **characterized in that** the device under test is conditioned before the start of the measurement so that in particular the exhaust gas temperature is above a predetermined temperature threshold value and/or within a predetermined temperature window.

14. The method according to one of claims 1 to 13, **characterized**
- **in that** a reference parameter, in particular a vehicle-specific pollutant limit value, is provided for checking the at least one exhaust gas parameter of the device under test and is compared to the at least one determined exhaust gas parameter,
- or in that reference parameters, in particular vehicle-specific pollutant limit values, are provided for checking the determined exhaust gas parameters of the device under test and are compared to the determined exhaust gas parameters.

15. The method according to one of claims 1 to 14, **characterized**
- **in that** the first constant operating state corresponds to that operating state in which the **combustion engine** is conditioned,
- **in that** the device under test is operated in this first constant operating mode and for conditioning:
- at idle at a constant increased idle speed,
- and/or at idle at a constant idle speed increased to 20 % to 40 %, in particular to 30 %, of the speed of the maximum power of the device under test,
- and/or at a constantly increased load with respect to the other constant operating mode,
- **in that** right after the conditioning the first constant operating mode is verified and then the first measurement is taken, wherein the load preferably remains unchanged at the transition between conditioning and the first constant operating mode,
- and **in that** the device under test is then optionally operated in the second constant operating mode at idle at a constant idle speed.

## Revendications

1. Une méthode de détermination et de contrôle d'au moins une valeur caractéristique des gaz d'échappement d'un dispositif testé à l'aide d'un système de mesure, le dispositif testé contenant au moins un moteur à combustion interne et éventuellement un système de post-traitement des gaz d'échappement en aval du moteur à combustion interne, la méthode comprenant les étapes suivantes :
- mettre le dispositif testé dans un premier mode de fonctionnement constant,
- vérifier si un mode de fonctionnement constant est présent en mesurant l'émission d'au moins un composant de gaz d'échappement et/ou le ratio d'air dans le gaz d'échappement du dispositif testé et en détectant et/ou en surveillant les variations de la valeur de l'émission capturée ou des émissions capturées pendant le fonctionnement du dispositif testé dans le premier mode de fonctionnement constant,
la méthode étant **caractérisée par**
- mesurer une première valeur d'émission d'au moins un composant de gaz d'échappement et déterminer un premier ratio d'air à partir de la composition de gaz d'échappement pendant le premier mode de fonctionnement constant vérifié, la valeur d'émission étant en particulier une valeur de concentration d'un composant de gaz d'échappement ou une valeur de nombre de particules,
- déterminer une première valeur caractéristique des gaz d'échappement en convertissant la première valeur d'émission en un ratio d'air prédéfini ou en une combustion stoechiométrique en multipliant la première valeur d'émission par le premier ratio d'air.

2. La méthode selon la revendication 1, comprenant les étapes suivantes :
- mettre le dispositif testé dans un second mode de fonctionnement constant,
- vérifier si un mode de fonctionnement constant est présent en mesurant l'émission d'au moins un composant de gaz d'échappement et/ou le ratio d'air et en détectant et/ou en surveillant les variations de la valeur de l'émission capturée ou des émissions capturées pendant le fonctionnement du dispositif testé dans le second mode de fonctionnement constant,
- mesurer une seconde valeur d'émission d'au moins un composant de gaz d'échappement et déterminer un second ratio d'air à partir de la composition de gaz d'échappement pendant le second mode de fonctionnement constant vérifié, la valeur d'émission étant en particulier une valeur de concentration d'un composant de gaz d'échappement ou une valeur de nombre de particules,
- déterminer une seconde valeur caractéristique des gaz d'échappement en convertissant la second valeur d'émission en un ratio d'air prédéfini ou en une combustion stoechiométrique en multipliant la second valeur d'émission par le second ratio d'air.

3. La méthode selon l'une des revendications 1 ou 2, **caractérisée en ce que** le dispositif testé est opéré dans le premier mode de fonctionnement constant ou dans le second mode de fonctionnement constant au ralenti à une vitesse de ralenti constante.

4. La méthode selon la revendication 3, **caractérisée**
- **en ce que** le dispositif testé est opéré dans l'**autre** mode de fonctionnement constant, en particulier dans le second mode de fonctionnement constant :
- au ralenti à une vitesse de ralenti constante et accrue,
- et/ou au ralenti à une vitesse de ralenti constante augmentée à 20 à 40 %, notamment à 30 %, de la vitesse de la puissance maximale du dispositif testé,
- et/ou à une charge constamment accrue par rapport à l'autre mode de fonctionnement constant, en particulier par rapport au second mode de fonctionnement constant,
- **et/ou en ce que** le dispositif testé est un véhicule équipé d'un moteur à combustion interne, et dans laquelle le dispositif testé est soumis à une charge propre au dispositif testé accrue **par rapport à l'autre** état de fonctionnement constant afin d'établir un mode de fonctionnement constant, **en particulier** afin d'établir le second mode de fonctionnement constant.

5. La méthode selon l'une des revendications 2 à 4, **caractérisée**
- **en ce que** le dispositif testé est un véhicule équipé d'un moteur à combustion interne, dans laquelle le dispositif testé est soumis à une charge accrue propre au dispositif testé **par rapport à l'autre** état de fonctionnement constant afin d'établir un mode de fonctionnement constant, **en particulier** afin d'établir le second mode de fonctionnement constant, et dans laquelle la charge accrue propre au dispositif testé est
- une friction de moteur augmentée à une vitesse plus élevée,
- et/ou une contre-pression de gaz d'échappement accrue à une vitesse de moteur élevée,
- et/ou une charge accrue due à la connexion d'au moins une unité auxiliaire génératrice de charge propre au dispositif testé,
- **et/ou en ce que** le dispositif testé est un véhicule équipé d'un moteur à combustion interne, dans laquelle le dispositif testé est soumis à une charge accrue **par rapport à l'autre** état de fonctionnement constant afin d'établir un mode de fonctionnement constant, **en particulier** afin d'établir le second mode de fonctionnement constant, et la charge accrue étant produite en opérant le dispositif testé sur un banc d'essai à rouleaux.

6. La méthode selon l'une des revendications 1 à 5, **caractérisée**
- **en ce que** la température de gaz d'échappement du dispositif testé est mesurée,
- **et dans laquelle** la mesure de la première valeur d'émission du au moins un composant de gaz d'échappement et la détermination d'un premier ratio d'air à partir de la composition de gaz d'échappement pendant le premier mode de fonctionnement constant vérifié n'est effectuée que si la température de gaz d'échappement est supérieure à une valeur seuil de température prédéterminée de 200 °C en particulier et/ou se situe dans une plage de température prédéterminée,
- **et/ou dans laquelle** la mesure de la seconde valeur d'émission du au moins un composant de gaz d'échappement et la détermination d'un second ratio d'air à partir de la composition de gaz d'échappement pendant le **second** mode de fonctionnement **constant vérifié** n'est effectuée que si la température de gaz d'échappement est supérieure à une valeur seuil de température prédéterminée de 200 °C en particulier et/ou se situe dans une plage de température prédéterminée.

7. La méthode selon l'une des revendications 1 à 6, **caractérisée**
- **en ce que** les étapes suivantes sont effectuées pour vérifier si un mode de fonctionnement constant est présent :
- mesurer l'émission d'au moins un composant de gaz d'échappement dans le gaz d'échappement du dispositif testé pendant une période t,
- détecter et/ou surveiller des fluctuations des valeurs de l'émission capturée ou des émissions capturées pendant la période t,
- contrôler si les fluctuations des valeurs de l'émission capturée ou des émissions capturées pendant la période t se situent dans une bande de fluctuation maximale prédéterminée,
- **et/ou en ce que** les étapes suivantes sont effectuées pour vérifier si un mode de fonctionnement constant est présent :
- mesurer l'émission d'au moins un composant de gaz d'échappement dans le gaz d'échappement du dispositif testé pendant une période de cinq secondes,
- détecter et/ou surveiller des fluctuations des valeurs de l'émission capturée ou des émissions capturées pendant la période de cinq secondes,
- contrôler si les fluctuations des valeurs de l'émission capturée ou des émissions capturées pendant la période de cinq secondes sont inférieures à 5 %.

8. La méthode selon l'une des revendications 1 à 7, **caractérisée**
- **en ce que** les valeurs d'émission suivantes sont mesurées :
- la concentration en CO₂,
- et/ou la concentration en oxygène,
- et/ou la concentration en oxyde d'azote,
- et/ou le nombre de particules,
- et/ou la concentration en NH₃,
- et/ou la concentration en HC,
- et/ou la concentration en monoxyde de carbone,
- **et/ou en ce que** des valeurs caractéristiques de gaz d'échappement sont déterminées pour les composants de gaz d'échappement suivants :
- la concentration en oxyde d'azote,
- et/ou le nombre de particules,
- et/ou la concentration en NH₃,
- et/ou la concentration en HC,
- et/ou la concentration en monoxyde de carbone.

9. La méthode selon l'une des revendications 1 à 8, **caractérisée en ce que** la mesure de l'émission du au moins un composant de gaz d'échappement dans le gaz d'échappement du dispositif testé, la détermination du ratio d'air à partir de la composition de gaz d'échappement et la mesure de la température du gaz d'échappement, si elle est effectuée, sont réalisées avec le système de mesure, le système de mesure étant un système de mesure mesurant indépendamment du dispositif testé.

10. La méthode selon l'une des revendications 1 à 9, **caractérisée en ce que** la détermination du ratio d'air à partir de la composition de gaz d'échappement est effectuée :
- selon la méthode du bilan atomique à partir des composants de gaz d'échappement contenant du carbone, en tenant compte, le cas échéant, de la teneur en oxygène du gaz d'échappement,
- et/ou selon la méthode de l'oxygène résiduel, en utilisant une sonde lambda.

11. La méthode selon l'une des revendications 1 à 10, **caractérisée**
- **en ce que** la mesure de l'émission d'au moins un composant de gaz d'échappement dans le gaz d'échappement du dispositif testé et/ou la mesure de la valeur d'émission d'au moins un composant de gaz d'échappement est effectuée
- en dérivant un flux volumique partiel du gaz d'échappement émis par le dispositif testé au moyen d'une sonde de gaz d'échappement insérée dans l'ouverture de sortie de gaz d'échappement du dispositif testé,
- et en conduisant le flux volumique partiel dans le système de mesure,
- **et/ou en ce que** la mesure de l'émission d'au moins un composant de gaz d'échappement dans le gaz d'échappement du dispositif testé et/ou la mesure de la valeur d'émission d'au moins un composant de gaz d'échappement est effectuée
- en dérivant un flux volumique partiel du gaz d'échappement émis par le dispositif testé
- et en conduisant le flux volumique partiel dans le système de mesure au moyen d'une technologie d'échantillonnage de gaz d'échappement non chauffé,
- **et/ou en ce que** la mesure de l'émission d'au moins un composant de gaz d'échappement dans le gaz d'échappement du dispositif testé et/ou la mesure de la valeur d'émission d'au moins un composant de gaz d'échappement est effectuée
- en dérivant un flux volumique partiel du gaz d'échappement émis par le dispositif testé au moyen d'une sonde de gaz d'échappement insérée dans l'ouverture de sortie de gaz d'échappement du dispositif testé,
- et en conduisant le flux volumique partiel dans un système de mesure,
- et dans laquelle la mesure de la température de gaz d'échappement est effectuée par un capteur de température disposé sur la sonde de gaz d'échappement.

12. La méthode selon l'une des revendications 1 à 11, **caractérisée**
- **en ce que** la mesure de l'émission d'au moins un composant de gaz d'échappement dans le gaz d'échappement du dispositif testé et/ou la mesure de la valeur d'émission du au moins un composant de gaz d'échappement est effectuée après la séparation de la teneur en vapeur d'eau du gaz d'échappement,
- **et/ou en ce qu**'un analyseur de gaz d'échappement du système de mesure avec un temps de réponse inférieur à 10 secondes et un temps de montée inférieur à 5 secondes est utilisé pour mesurer les émissions.

13. La méthode selon l'une des revendications 1 à 12, **caractérisée en ce que** le dispositif testé est conditionné avant le début de la mesure de sorte que, en particulier, la température de gaz d'échappement soit supérieure à une valeur seuil de température prédéterminée et/ou se situe dans une plage de température prédéterminée.

14. La méthode selon l'une des revendications 1 à 13, **caractérisée**
- **en ce qu'**une valeur caractéristique de référence, en particulier une valeur limite de pollution spécifique au véhicule, est prévue pour le contrôle du au moins une valeur caractéristique de gaz d'échappement du dispositif testé et est comparée à au moins une valeur caractéristique de gaz d'échappement déterminée,
- ou en ce que des valeurs caractéristiques de référence, en particulier des valeurs limites de pollution spécifiques au véhicule, sont prévues pour le contrôle des valeurs caractéristiques de gaz d'échappement déterminées du dispositif testé et comparées aux valeurs caractéristiques de gaz d'échappement déterminées.

15. La méthode selon l'une des revendications 1 à 14, **caractérisée**
- **en ce que** la première condition de fonctionnement constante correspond à la condition de fonctionnement dans laquelle le **moteur à combustion interne** est conditionné,
- **en ce que** dans ce premier mode de fonctionnement constant et pour le conditionnement le dispositif testé est opéré :
- au ralenti à une vitesse de ralenti constante et accrue,
- et/ou au ralenti à une vitesse de ralenti constante augmentée à 20 à 40 %, notamment à 30 %, de la vitesse de la puissance maximale du dispositif testé,
- et/ou à une charge constamment accrue par rapport à l'autre mode de fonctionnement constant,
- **en ce que** la vérification du premier mode de fonctionnement constant puis la première mesure sont effectuées directement après le conditionnement, la charge restant de préférence inchangée pendant la transition entre le conditionnement et le premier mode de fonctionnement constant,
- et **en ce que** le dispositif testé est ensuite opéré, le cas échéant, dans le second mode de fonctionnement constant au ralenti à une vitesse de ralenti constante.
